# EUROPÄISCHE PATENTSCHRIFT

(11) **EP 1 057 723 B1**
(45) Veröffentlichungstag und Bekanntmachung des Hinweises auf die Patenterteilung: **15.09.2004**
(21) Anmeldenummer: 00110307.6
(22) Anmeldetag: 13.05.2000
(51) Int. Cl.: B64C 9/24, B64C 9/14

(54) **Zusatzflügel für Hauptflügel von Flugzeugen**
Auxiliary wing for aircraft main wings
Aile auxiliaire pour ailes principales d'aéronef

(30) Priorität: 04.06.1999 DE 19925560
(43) Veröffentlichungstag der Anmeldung: 06.12.2000
(73) Patentinhaber: DLR Deutsches Zentrum für Luft- und Raumfahrt e.V., 51147 Köln (DE)
(72) Erfinder: Dobrzynski, Werner, Dr. Ing., 38302 Wolfenbüttel (DE); Gehlhar, Burkhard, 38302 Wolfenbüttel (DE)
(74) Vertreter: Gerstein, Hans Joachim, Dipl.-Ing.

(56) Entgegenhaltungen:
- DE-C- 715 266
- FR-A- 1 011 175
- DOBRZYNSKI W ET AL: "Airframe Noise Studies on Wings with Deployed High-Lift Devices" 4TH AIAA/CEAS AEROACOUSTICS CONFERENCE, 2.-4. JUNI 1998, PAPER NO. 98-2337, AMERICAN INSTITUTE OF AERONAUTICS AND ASTRONAUTICS. NEW YORK, US, XP001084583

## Beschreibung

Die Erfindung betrifft einen Hauptflügel mit Zusatzflügel von Flugzeugen, wobei der Zusatzflügel an den Hauptflügel angelenkt und ausfahrbar ist und wobei eine sich in Richtung des Hauptflügels erstreckende Trennfläche an dem Zusatzflügel vorgesehen ist.

Zur Steigerung des Auftriebs im Landeanflug bei reduzierter Fluggeschwindigkeit werden Zusatzflügel, z. B. Vorflügel und Landeklappen, an die Hauptflügel von Flugzeugen angebracht. Im Landeanflug werden diese Zusatzflügel ausgefahren, so dass die effektive Profilwölbung und Auftriebsfläche des Hauptflügels erhöht wird. Bei heutigen Verkehrsflugzeugen werden i. d. R. Vorflügel vom Typ "Handley page slats" und bei den Landeklappen sogenannte "Fowlerflaps" eingesetzt.

In van den Berg, B.: An experimental investigation on an airfoil with a slat into the effect of the seperation bubble in the slat cove, NLR memorandum AL-85-001 U, February 1985 ist ein Versuch mit Vorflügeln beschrieben, bei denen die Vorflügelrückseiten verschiedene Formen aufweisen. In der "Basic slat configuration" ist die Querschnittsform des Vorflügels so bemessen, dass die Kontur der Vorflügelrückseite das negative Abbild der Kontur der Hauptflügelnase darstellt. Wenn der Vorflügel während des Reisefluges eingefahren ist, liegt der Vorflügel somit bündig an dem Hauptflügel an. Bei einer anderen Querschnittsform, "Slat hook rounded off" genannt, ist der untere Bereich der Vorflügelrückseite abgerundet und liegt nicht bündig an dem Hauptflügel an, wenn der Vorflügel eingefahren ist. Eine andere Querschnittsform, die sogenannte "Fairing in slat cove" hat eine Überhöhung im unteren Bereich der Vorflügelrückseite, so dass die Querschnittsform des Vorflügels eine Blasenkontur aufweist. Bei dieser Querschnittsform wird im ausgefahrenen Zustand des Vorflügels der Auftrieb erhöht, da höhere Strömungsgeschwindigkeiten der Spaltströmung zwischen dem Vorflügel und dem Hauptflügel auftreten.

In der DE-OS 31 14 143 A1 ist ein Tragflügel mit einem Vorflügel und einem Hauptflügel beschrieben, bei dem an der Unterseite des ausfahrbaren Vorflügels zur Abdeckung des Spalts zwischen Vorflügel und Hauptflügel eine Hilfsklappe vorgesehen ist. Die Unterseite der Hilfsklappe ist so ausgeformt, dass sich der Vorflügel bündig an den Hauptflügel anschließt, wenn diese eingefahren ist. Diese, der Hauptflügelkontur angepasste Form, kann nicht der Form der Trennstromlinie entsprechen und damit die Strömungsablösung an der Vorflügelrückseite nicht verhindern. Somit kann die gewünschte Lärmreduktion nicht erreicht werden.

Die DE-OS 1 907 710, DE-OS 1 481 580, EP 0 227 643 A2, EP 0 188 823 A1 und das US-Patent 3,486,720 zeigen entsprechende Tragflächenkonstruktionen, bei denen an der Unterseite des Vorflügels eine sich in Richtung des Hauptflügels erstreckende Nase angeordnet ist. Im eingefahrenen Zustand bewirkt diese Nase einen bündigen Abschluss des Vorflügels an den Hauptflügel. Nachteilig führt dies jedoch zu erhöhten Geräuschemissionen.

In dem US-Patent 3,203,647 ist ein Ballon an der Vorderkannte des Zusatzflügels einer Tragflügelkonstruktion gezeigt. Dieser Ballon kann im ausgefahrenen Zustand des Zusatzflügels aufgeblasen werden, so dass ein Strömungsabriss an der üblicherweise scharfen Vorderkannte des Zusatzflügels vermieden wird.

In den Proceedings der 4. A/AA/CEAS Aeroacoustics Conference, 2.-4. Juni 1998, Paper No. 98-2337, wird eine an einem Vorflügel angebrachte stromlinien-förmige Trennfläche im Spalt zwischen Vor- und Hauptflügel geseigt.

Ausgehend von diesen Erkenntnissen und den bekannten Flügelkombinationen war es Aufgabe der Erfindung, die Lärmemission von Verkehrsflugzeugen im Landeanflug zu mindern. Hierbei war zu beachten, dass das Umströmungsgeräusch der Flügel und der Zelle meist größer als das Geräusch der Triebwerke ist, da Maßnahmen zur Triebwerkslärmminderung in der Phase des Landeanflugs bereits erfolgreich umgesetzt wurden. Die wesentlichsten Strömungsgeräuschquellen sind die Fahrwerke, die Vorflügel und die Landeklappenseitenkanten.

Die Aufgabe wird durch Hauptflügel mit Zusatzflügel von Flugzeugen gemäß Patentanspruch 1 gelöst, indem eine Trennfläche an dem Zusatzflügel, die sich in Richtung des Hauptflügels erstreckt und entlang der Trennstromlinie erstreckt, die sich zwischen einem Wirbelströmungsgebiet und einer Spaltströmung der zwischen dem Zusatzflügel und dem Hauptflügel strömenden Luft ohne Trennfläche einstellen würde.

Auf der Rückseite des Vorflügels entsteht im ausgefahrenen Zustand eine Strömungsablösung der Spaltströmung zwischen dem Vorflügel und dem Hauptflügel in Form eines ausgeprägten Wirbels. Dieser Wirbel wird durch die angrenzende Spaltströmung ständig mit neuer Energie versorgt. Es wurde erkannt, dass über die Trennstromlinie zwischen dem Wirbelströmungsgebiet und der Spaltströmung kontinuierlich Turbulenzballen in die beschleunigte Spaltströmung gelangen, wodurch Lärm entsteht. Es wurde weiterhin erkannt, daß Lärm auch durch die Abströmung der Turbulenzballen über die Hinterkante des Vorflügels entsteht. Es wurde weiter erkannt, daß die geometrische Lage des Wirbels nicht stabil ist, so daß durch die oszillatorische Lage der Wirbelachse eine zusätzliche instationäre Geschwindigkeitskomponente überlagert wird, wodurch ebenfalls ein Strömungsgeräusch verursacht wird.

Es hat sich herausgestellt, daß durch Einbringen einer Trennfläche entlang der Trennstromlinie zwischen dem Wirbel und der Spaltströmung diese vorgenannten Strömungsquellen minimiert werden können, ohne den Auftrieb zu beeinflussen. Durch diese Trennfläche wird der Impulsaustausch quer zur Richtung der Spaltströmung verhindert.

Es ist ausreichend, wenn das Wirbelgebiet nur teilweise abgedeckt wird und die Trennfläche nicht das gesamte rückwärtige Vorflügelprofil umschließt. Hierdurch kann das Umströmungsgeräusch des Gesamtflügzeugs um etwa 3 dB vermindert werden.

Die Trennfläche kann starr sein und sollte an den Zusatzflügel angelenkt und einschwenkbar sein, wenn der Zusatzflügel in Richtung des Hauptflügels eingefahren wird. Hierdurch wird gewährleistet, daß der Vorflügel im Reiseflug bündig an den Hauptflügel angelegt werden kann und keine nennenswerten Strömungsverluste auftreten.

Die Trennfläche kann aber auch flexibel sein und während des Einfahrens des Vorflügels in den Spalt zwischen Vorflügel und Hauptflügel gedrückt werden. Allerdings hat sich herausgestellt, daß eine flexible Trennfläche im ausgefahrenen Zustand des Vorflügels durch den Wirbel gegen die Vorflügelrückseite gedrückt werden kann und sich aufgrund dieses Kräfteverhältnis nicht automatisch in der Trennstromlinie einstellt.

Es ist daher vorteilhaft, wenn die Trennfläche aus einem aufblasbaren Ballon gebildet wird, der an dem Zusatzflügel angebracht und mit Druck beaufschlagbar ist. Wenn der Zusatzflügel ausgefahren wird, kann der Ballon mit Druckkraft aufgebläht werden, so daß er das Wirbelströmungsgebiet vollständig ersetzt. Beim Einfahren des Vorflügels wird der Druck abgelassen und der Ballon in den Spalt zwischen Vorflügel und Hauptflügel gedrückt.

Die Erfindung wird nachfolgend anhand der beigefügten Zeichnungen näher erläutert. Es zeigen:
- Figur 1 -: Querschnittsansicht eines Vorflügels vom Typ "Handley page" mit Trennfläche im ausgefahrenen Zustand;
- Figur 2 -: Querschnittsansicht des Vorflügels vom Typ "Handley page" mit Trennfläche im eingefahrenen Zustand;
- Figur 3 -: Stromlinienbild für die Umströmung eines Vorflügels;
- Figur 4 -: Vergleich des relativen Quellgeräuschpegels bei einem Vorflügel mit und ohne Trennfläche;
- Figur 5 -: Geräuschpegel bei einem Vorflügel mit und ohne Trennfläche in Abhängigkeit von dem Anstellwinkel des Vorflügels.

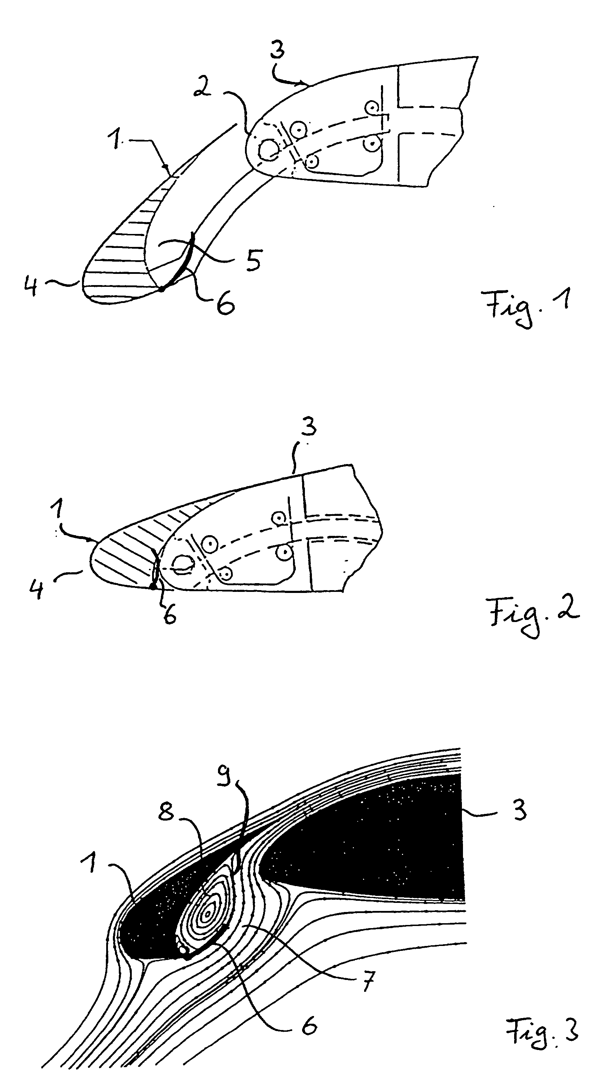

Die Figur 1 läßt einen Vorflügel 1 vom Typ "Handley page" im Querschnitt erkennen, der an die Nase 2 eines Hauptflügels 3 angelenkt ist. Der Vorflügel 1 befindet sich im ausgefahrenen Zustand. Diese Einstellung wird für den Landeanflug gewählt, um den Auftrieb zu steigern. Es ist erkennbar, daß die Kontur der Vorflügelrückseite 5 an die Nase 2 des Hauptflügels 3 angepaßt ist. Die Trennfläche 6 ist an die Unterkante der Vorflügelrückseite 5 angelenkt und erstreckt sich von dieser etwa parabelförmig in Richtung der Nase 2 des Hauptflügels 3. Vorzugsweise ist die Trennfläche 6 einklappbar oder einfahrbar, wenn der Vorflügel 1 an den Hauptflügel 3 gefahren ist, wie in der Figur 2 skizziert ist.

Die Trennfläche 6 muß, wie in der Figur 2 skizziert ist, soweit z. B. in einen Stauraum in der Vorflügelrückseite 5 eingeklappt werden, dass der Vorflügel 1 bündig an dem Hauptflügel 3 anliegt, und damit die Kontur der Gesamtanordnung von Vor- und Hauptflügel 1 und 3 ( Reisekonfiguration) keine Spalte mehr aufweist.

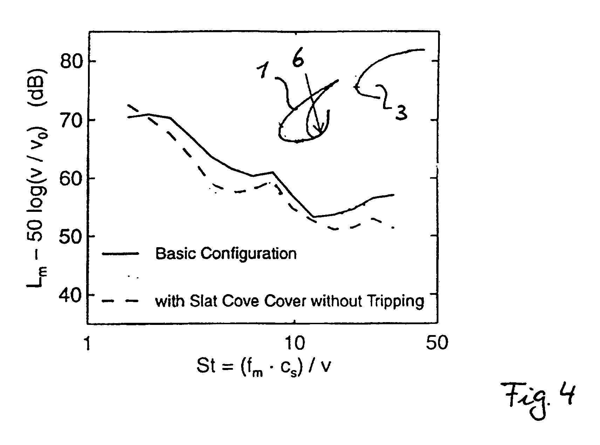

Die Figur 3 zeigt ein typisches Stromlinienbild für die Umströmung eines Vorflügels 1, der für einen Landeanflug ausgefahren ist. Es ist erkennbar, dass eine Spaltströmung 7 zwischen dem Vorflügel 1 und dem Hauptflügel 3 hindurch läuft, so dass trotz starker Wölbung der Gesamtanordnung Strömungsablösungen am Hauptflügel 3 vermieden werden. Zwischen der Vorflügelrückseite 5 und der Spaltströmung 7 befindet sich ein Wirbelströmungsgebiet 8. Über die Trennstromlinie 9 zwischen dem Wirbelströmungsgebiet 8 und der Spaltströmung 7, die auch als Scherschicht bezeichnet werden kann, gelangen Turbulenzballen in die Spaltströmung 7, die aufgrund der Spaltverengung im oberen Bereich zwischen Vorflügel 1 und Hauptflügel 3 beschleunigt werden. Zudem bewegt sich die Wirbelachse oszillatorisch. Hierdurch wird ein Strömungsgeräusch verursacht. Wenn nun in die Trennstromlinie 9 eine Trennfläche 6 eingebracht wird, wird ein Impulsaustausch quer zur Richtung der Spaltströmung 7 verhindert und die oszillatorische Bewegung der Wirbelachse verringert.

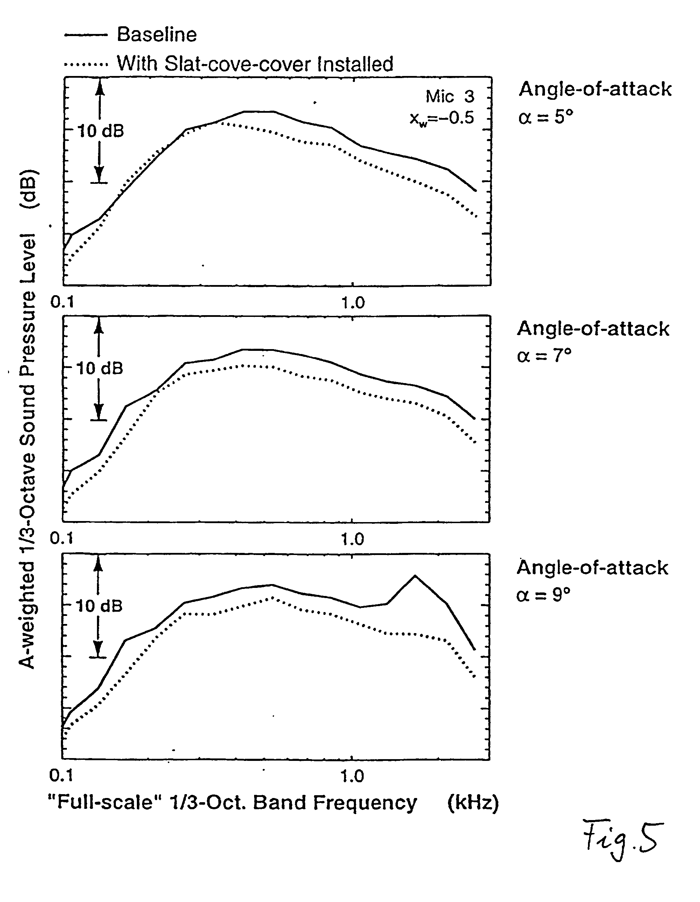

Die Figur 4 lässt ein Diagramm erkennen, bei dem ein relativer Quellgeräuschpegel über einer dimensionslosen Frequenz bei einem Strömungsversuch mit einem Vorflügel 1 mit und ohne Trennfläche 6 in der Trennstromlinie 9 aufgetragen ist. Aus dem Diagramm ist erkennbar, daß durch eine teilweise Abdeckung der Vorflügelrückseite 5 der Vorflügellärm vermindert werden kann. Die Trennfläche 6 hat einen etwa parabelförmigen Verlauf. Sie deckt die in der Figur 3 skizzierte Trennstromlinie 9 nur etwa zur Hälfte ab.

Der relative Quellgeräuschpegel ist für einen Vorflügel 1 ohne Trennfläche 6 als durchgezogene Linie über einer dimensionslosen Frequenz in dB aufgetragen. Es ist erkennbar, daß die Kurven für den relativen Quellgeräuschpegel für die Versuchsanordnungen mit Trennfläche 6, d.h. mit slat-cove-cover, unterhalb von der durch gezogenen Linie liegen. Der Quellgeräuschpegel konnte ersichtlich verringert werden.

Die Figur 5 zeigt das Ergebnis eines Experiments, bei dem der gemessene Geräuschpegel eines Modells über die auf die Originalausführung der Tragflächen umgerechneten Frequenz aufgetragen ist. Der Versuch wurde bei verschiedenen Anstellwinkeln der Flugzeuglängsachse, nämlich bei α = 5°, 7° und 9° durchgeführt. Die durchgezogene Linie zeigt jeweils den Geräuschpegel bei einem Vorflügel 1 ohne Trennfläche 6 und die gepunktete Linie den Geräuschpegel für einen Vorflügel 1 mit einer Trennfläche 6, die entsprechend der Figur 3 teilweise entlang der Trennstromlinie 9 verläuft. Es ist aus dem Diagramm ersichtlich, daß der Geräuschpegel bei jedem Anstellwinkel durch die Trennfläche 6 verringert werden kann. Die Größenordnung der Geräuschpegelminderung beträgt ca. 3 dB.

## Patentansprüche

1. Hauptflügel mit Zusatzflügel (3) von Flugzeugen, wobei der Zusatzflügel an den Hauptflügel (3) angelenkt und ausfahrbar ist und wobei eine sich in Richtung des Hauptflügels (3) erstreckende Trennfläche (6) an dem Zusatzflügel vorgesehen ist, **dadurch gekennzeichnet, dass** sich die Trennfläche (6) entlang der Trennstromlinie (9) erstreckt, die sich zwischen einem Wirbelströmungsgebiet (8) und einer Spaltströmung (7) der zwischen dem Zusatzflügel und dem Hauptflügel (3) strömenden Luft ohne Trennfläche (6) einstellen würde.

2. Hauptflügel mit Zusatzflügel nach Anspruch 1, **dadurch gekennzeichnet, dass** die Trennfläche (6) die Trennstromlinie (9) nur teilweise überdeckt.

3. Hauptflügel mit Zusatzflügel nach Anspruch 1, **dadurch gekennzeichnet, dass** die Trennfläche (6) die Trennstromlinie (9) vollständig überdeckt.

4. Hauptflügel mit Zusatzflügel nach einem der vorhergehenden Ansprüche, **dadurch gekennzeichnet, dass** die Trennfläche (6) starr ist.

5. Hauptflügel mit Zusatzflügel nach Anspruch 4, **dadurch gekennzeichnet, dass** die starre Trennfläche (6) an den Zusatzflügel angelenkt und einschwenkbar ist, wenn der Zusatzflügel in Richtung des Hauptflügels (3) eingefahren wird oder bei veränderten Flugzeuganstellwinkel eine Anpassung der Winkelstellung der Trennfläche (6) erforderlich ist.

6. Hauptflügel mit Zusatzflügel nach einem der Ansprüche 1 bis 3, **dadurch gekennzeichnet, dass** die Trennfläche (6) flexibel ist.

7. Hauptflügel mit Zusatzflügel nach Anspruch 6, **dadurch gekennzeichnet, dass** ein aufblasbarer Ballon an dem Zusatzflügel angebracht und mit Druck beaufschlagbar ist, wenn der Zusatzflügel ausgefahren wird, und ein Teil der Ballonoberfläche, der die untere Vorderkante des Zusatzflügels nach hinten verlängert, entsprechend der Trennfläche (6) ausgeformt ist.

8. Hauptflügel mit Zusatzflügel nach Anspruch 7, **dadurch gekennzeichnet, dass** der Ballon so geformt ist, dass er im aufgeblasenen Zustand das Wirbeiströmungsgebiet (8) ersetzt.

9. Hauptflügel mit Zusatzflügel nach einem der vorhergehenden Ansprüche, **dadurch gekennzeichnet, dass** der Zusatzflügel ein Vorflügel (1) ist.

## Claims

1. Aircraft mainplane having an additional aerofoil, in which the additional aerofoil is hinged on the mainplane (3) and can be extended, and in which a separating surface (6) extending in the direction of the mainplane (3) is provided on the additional aerofoil, **characterized in that** the separating surface (6) extends along a separation flow line (9) which, without a separating surface (6), would position itself between a vortex flow region (8) and a slat cove flow (7) of the air flowing between the additional aerofoil and the mainplane (3).

2. Aircraft mainplane having an additional aerofoil according to Claim 1, **characterized in that** the separating surface (6) only partially covers the separation flow line (9).

3. Aircraft mainplane having an additional aerofoil according to Claim 1, charaterized in that the separating surface (6) completely covers the separation flow line (9).

4. Aircraft mainplane having an additional aerofoil according to one of the preceding claims, **characterized in that** the separating surface (6) is rigid.

5. Aircraft mainplane having an additional aerofoil according to Claim 4, **characterized in that** the rigid separating surface (6) is hinged on the additional aerofoil and can pivot in when the additional aerofoil is retracted in the direction of the mainplane (3) or if the angular position of the separating surface (6) needs to be adapted when the aircraft angle of attack changes.

6. Aircraft mainplane having an additional aerofoil according to one of Claims 1 to 3, **characterized in that** the separating surface (6) is flexible.

7. Aircraft mainplane having an additional aerofoil according to Claim 6, **charcaterized in that** an inflatable balloon is fitted on the additional aerofoil and pressure can be applied to it when the additional aerofoil is extended, and a portion of the balloon surface, which lengthens the lower leading edge of the additional aerofoil to the rear, is designed such that it corresponds to the separating surface (6).

8. Aircraft mainplane having an additional aerofoil according to Claim 7, **characterized in that** the balloon is shaped such that, when inflated, it replaces the vortex flow region (8).

9. Aircraft mainplane having an additional aerofoil according to one of the preceding claims, **characterized in that** the additional aerofoil is a leading-edge slat (1).

## Revendications

1. Aile principale avec aile auxiliaire (3) d'avion, où l'aile auxiliaire est déployable et articulée à l'aile principale (3) et où une surface de séparation (6) s'étendant en direction de l'aile principale (3) est prévue sur l'aile auxiliaire, **caractérisée en ce que** la surface de séparation (6) s'étend le long d'un filet de séparation (9) qui en l'absence de surface de séparation (6) s'établirait entre une zone d'écoulement tourbillonnaire (8) et un écoulement de fente (7) de l'air s'écoulant entre l'aile auxiliaire et l'aile principale (3).

2. Aile principale avec aile auxiliaire selon la revendication 1, **caractérisée en ce que** la surface de séparation (6) ne couvre que partiellement le filet de séparation (9).

3. Aile principale avec aile auxiliaire selon la revendication 1, **caractérisée en ce que** la surface de séparation (6) couvre complètement le filet de séparation.

4. Aile principale avec aile auxiliaire selon l'une des revendications précédentes, **caractérisée en ce que** la surface de séparation (6) est rigide.

5. Aile principale avec aile auxiliaire selon la revendication 4, **caractérisée en ce que** la surface de séparation rigide (6) est articulée et rabattable sur l'aile auxiliaire lorsque l'aile auxiliaire est rétractée en direction de l'aile principale (3) ou bien lorsqu'en cas de modification de l'angle d'incidence de l'avion une adaptation de la position angulaire de la surface de séparation (6) est nécessaire.

6. Aile principale avec aile auxiliaire selon l'une des revendications 1 à 3, **caractérisée en ce que** la surface de séparation (6) est flexible.

7. Aile principale avec aile auxiliaire selon la revendication 6, **caractérisée en ce qu'**un ballon gonflable est rapporté sur l'aile auxiliaire et peut être mis en pression lorsqu'on déploie l'aile auxiliaire, et une partie de la surface du ballon, qui prolonge vers l'arrière le bord avant inférieur de l'aile auxiliaire, est conformée en correspondance avec la surface de séparation (6).

8. Aile principale avec aile auxiliaire selon la revendication 7, **caractérisée en ce que** le ballon est formé de façon à remplacer la zone d'écoulement tourbillonnaire (8) à l'état gonflé.

9. Aile principale avec aile auxiliaire selon l'une des revendications précédentes, **caractérisée en ce que** l'aile auxiliaire est un bec mobile (1).
